# EUROPEAN PATENT APPLICATION

(11) **EP 1 598 261 A2**
(43) Date of publication of application: **23.11.2005**
(21) Application number: 05010586.5
(22) Date of filing: 17.05.2005
(51) Int. Cl.: B62D 33/06

(54) **Modular bed adapted to be composed of a plurality of modular elements**

(30) Priority: 20.05.2004 IT TO20040333
(71) Applicant: O.M.G. S.R.L. OFFICINE MECCANICHE, 10080 Lusiglie' (TO) (IT)
(72) Inventor: Migliorin, Livio O.M.G. S.R.L. OFFICINE MECCANICHE, 10080 Lusiglie' (TO) (IT); Boggio, Fabrizio O.M.G. S.R.L. OFFICINE MECCANICHE, 10080 Lusiglie' (TO) (IT)
(74) Representative: Garavelli, Paolo

(57) **Abstract**

A modular bed adapted to be composed (1), particularly for truck cabins, is disclosed, composed of a plurality of modular elements (3) adapted to be composed, that are mobile one with respect to another, and that are equipped with respective accessories (5, 7).

## Description

The present invention refers to a modular bed adapted to be composed, particularly for cabins of trucks and other types of vehicles.

The present invention will be described herein below in its application to the field of beds for truck cabins, but it is obvious that it can find a valid extension to fields in which small foldable bed are used in narrow spaces, such as, for example, campers, caravans, boats, mobile houses, etc.

In the field of vehicles, truck drivers often need to rest during their journeys; truck cabins therefore are often equipped with foldable beds, that allow saving precious space in vehicle cabins. The most widespread beds nowadays are divided into three elements that are hinged along a side thereof to the truck cabin and are separately able to be overturned between a not operating closing position and an opening position to allow creating the bed for resting.

These types of beds, however, do not allow anything else apart from the above mentioned operations, and are therefore lacking that modularity that is more and more required nowadays in narrow spaces, in which there is a need of objects that are as much flexible and dynamic as possible. Moreover, known beds are not equipped with accessories that improve their comfort of use by the end user.

Object of the present invention is solving the above prior art problems, by providing a modular bed adapted to be composed which, in addition to the already known characteristics of currently marketed beds, can be composed and recomposed at will, providing different arrangements from those of a traditional bed, such as for example arm-chair with small table, plane for supporting and containing objects, etc.

A further object of the present invention is providing a bed of the above-mentioned type that has a reduced emcumbrance, whose components can be comfortably and easily moved or translated by the user, and is of a light, sturdy and inexpensive material, suitable to the most various users needs.

The above and other objects and advantages of the invention, as will appear from the following description, are obtained by a bed as claimed in claim 1. Preferred embodiments and non-trivial variations of the present invention are the subject matter of the dependent claims.

The present invention will be better described by some preferred embodiments, provided as a non-limiting example, with reference to the enclosed drawings, in which:

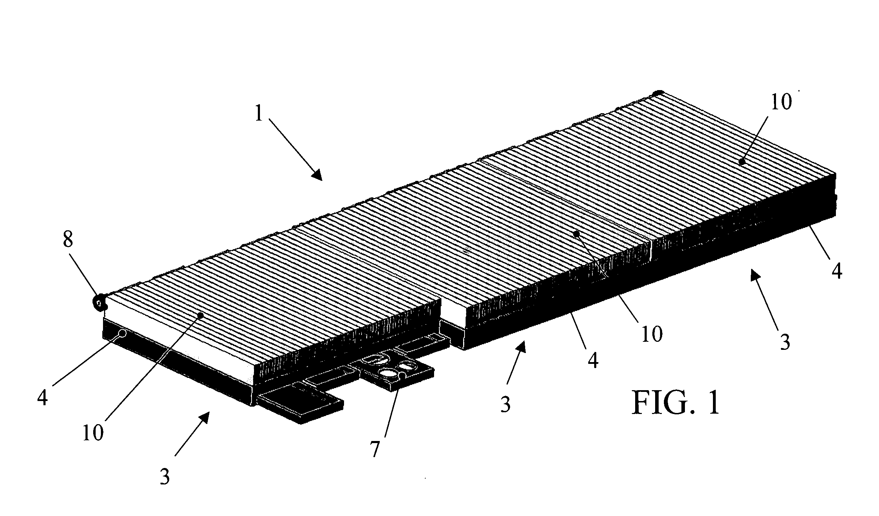

- Figure 1 is a front perspective view of a preferred embodiment of the bed of the present invention;
- Figure 2 is a view of the bed of Fig. 1 in a possible operating configuration thereof;
- Figure 3 is a perspective view in which the partial extraction of a table from the bed of Fig. 2 is shown; and

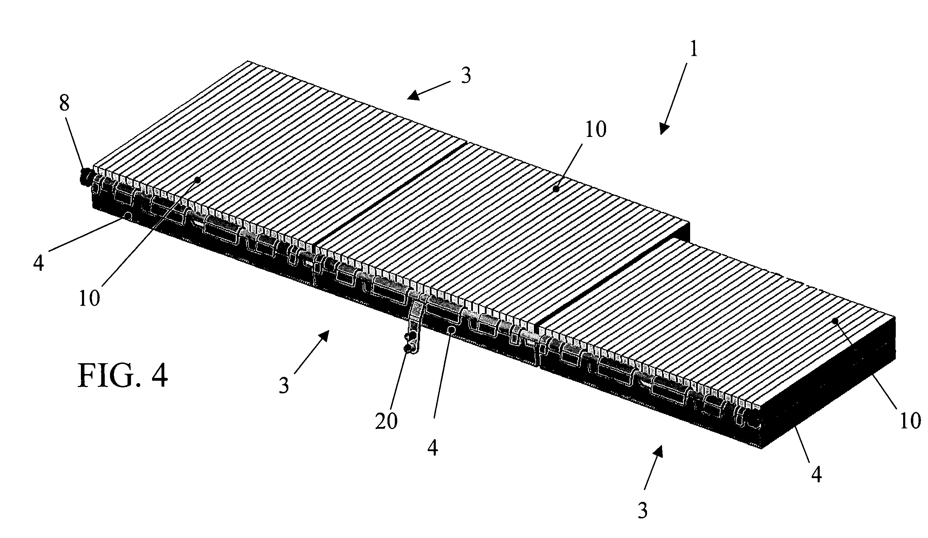

- Figure 4 is a rear perspective view of the bed of Fig. 1.

With reference to the figures, the modular bed adapted to be composed 1 of the present invention is composed of a plurality of modular elements 3 adapted to be composed, that are mobile one with respect to another, and are equipped with respective accessories 5, 7.

In particular, as shown, the modular elements 3 adapted to be composed are made of quadrangular tanks 4 equipped with openings and rooms for placing the accessories 5, 7, in such a way that, during their rest position, when the elements 3 are bent against the cabin wall, the accessories are contained and disappear inside them without creating encumbrance problems.

Preferably, the modular elements 3 adapted to be composed are made of plastic, lightweight and sturdy material, and, in the most common embodiment, are equal to three.

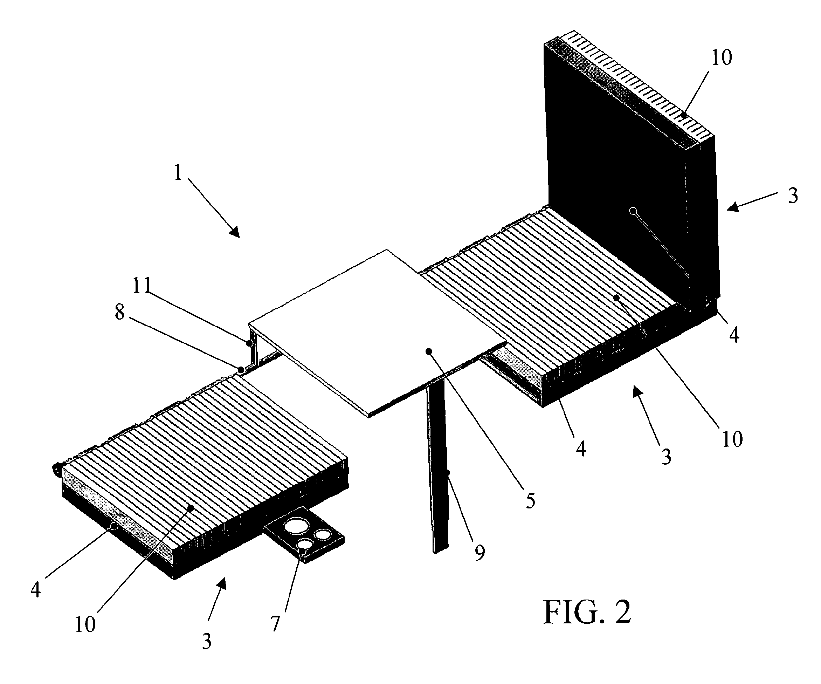

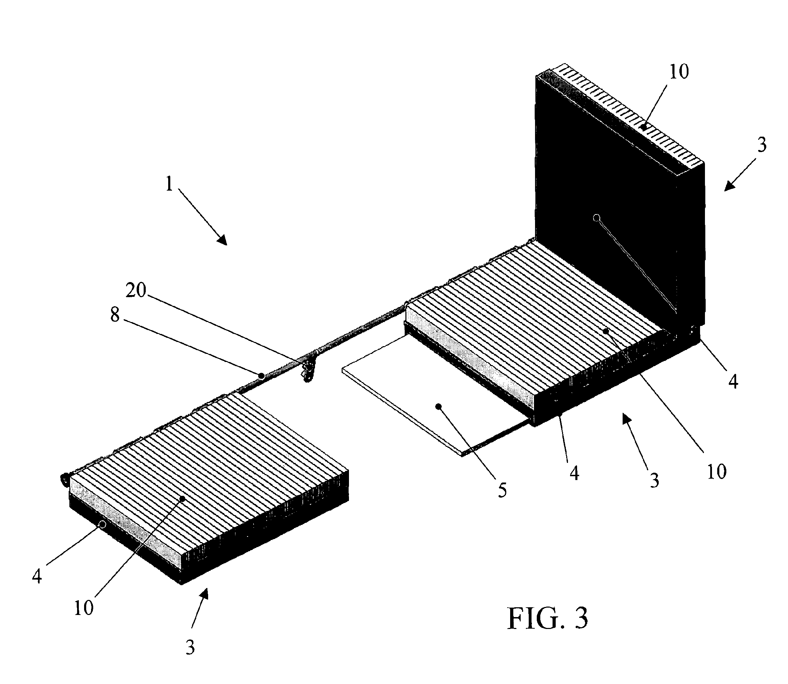

In the preferred embodiment shown, the modular elements 3 adapted to be composed can be detached and are adapted to be placed over other modular elements 3 adapted to be composed in order to make arm-chairs or sofas, as can be well seen in Figures 2 and 3, in which one of the elements 3 has been reused as back of a possible arm-chair.

Always as shown, the modular elements 3 adapted to be composed are hinged on one side thereof to a supporting bar 8 connected (for example through securing means 20) to the wall (not shown) of a vehicle cabin and are adapted to be secured to and freed from it according to the use configurations to be obtained. It is also obviously possible to keep a configuration like the known one, in which the elements 3 remain hinged to the bar 8 assuming the two operating resting and working positions.

The modular elements 3 adapted to be composed can be also made in order to slide along the supporting bar 8, without being detached therefrom, for a further use flexibility.

As variation made possible by the configuration in which the bed 1 of the invention has been arranged, the modular elements 3 adapted to be composed can be equipped on one side thereof (the hinged side in the figures) with a plurality of small wheels (not shown) adapted to be housed in corresponding guiding tracks (not shown) obtained in the vehicle cabin wall, in order to move the modular elements 3 adapted to be composed by sliding in the guiding tracks in order to arrange the modular elements 3 adapted to be composed one overlapping the other or one parallel to the other, to create again end use configurations such as seats or planes. The contrary configuration will obviously also be possible: the small wheels are realised in the cabin wall and the modular elements 3 adapted to be composed are equipped with guiding projections that engage the fixed wheels.

As substantialy known, the modular elements 3 adapted to be composed are then adapted each one to contain a pillow 10: the particularity of the inventive bed 1 is that, when the tanks 4 are made of plastic material, it is possible to co-stamp the pillow 10 with its own corresponding modular element 3 adapted to be composed, in order to further reduce the cost of the whole structure.

Moreover, the modular elements 3 adapted to be composed are equipped with an opening and a room for containing and making disappear therein at least one small table 5, as shown in the Figures.

The small table 5 can be equipped with a telescopic leg 9 for abutting onto the floor and with at least two legs 11 of a fixed length for abutting to the supporting bar 8 during the operating opening step of the table 5.

According to a possible variation, instead, the small table 5 can be free of legs, and simply housed in a suitable room from which it goes out in order to provide a support surface integral with the modular element 3 adapted to be composed of which it is part.

The modular elements 3 adapted to be composed can further be equipped with an opening and a room for containing and making disappear therein at least one objects-holder plane 7.

As shown, such objects-holder planes 7 are preferably a plurality, some of them being equipped with openings for supporting bottles or other vessels with cylindrical or various or elongated shapes.

The modular elements 3 adapted to be composed can obviously provide accessories placed on their lower part, namely the one oriented towards the cabin floor when the bed is in its open position.

It is thereby possible to realise a bed that is able to be overturned, but also decomposed and recomposed in the most varius configurations. Such bed is equipped with a series of accessories that are useful to improve the life conditions of a user inside limited spaces. And the bed is made in a lightweight, sturdy material with reduced costs, in addition to be easily used and readily adapted.

## Claims

1. Modular bed adapted to be composed (1), particularly for truck cabins, **characterised in that**:
- said bed (1) is composed of a plurality of modular elements (3) adapted to be composed;
- detti modular elements (3) adapted to be composed are mobile one with respect to another; and
- said modular elements (3) adapted to be composed are equipped with respective accessories (5, 7).

2. Bed (1) according to claim 1, **characterised in that** said modular elements (3) adapted to be composed are made of quadrangular tanks (4) equipped with openings and rooms for placing therein said accessories (5, 7).

3. Bed (1) according to claim 1, **characterised in that** said modular elements (3) adapted to be composed are made of plastic, lightweight and sturdy material.

4. Bed (1) according to claim 1, **characterised in that** said modular elements (3) adapted to be composed are three.

5. Bed (1) according to claim 1, **characterised in that** said modular elements (3) adapted to be composed are able to be detached and are adapted to be placed over other modular elements (3) adapted to be composed in order to realise arm-chairs or sofas.

6. Bed (1) according to claim 1, **characterised in that** said modular elements (3) adapted to be composed are hinged on one side thereof to a supporting bar (8) connected to a vehicle cabin wall and are adapted to be secured thereto and freed therefrom according to operating configurations to be obtained.

7. Bed (1) according to claim 1, **characterised in that** said modular elements (3) adapted to be composed are realised in order to slide along a supporting bar (8), without being detached from said supporting bar (8).

8. Bed (1) according to claim 1, **characterised in that** said modular elements (3) adapted to be composed are equipped on one side thereof with a plurality of small wheels adapted to be housed into corresponding guiding tracks obtained in the vehicle cabin wall, in order to move said modular elements (3) adapted to be composed by sliding them in said guiding tracks in order to arrange said modular elements (3) adapted to be composed one overlapping the other or one parallel to the other.

9. Bed (1) according to claim 1, **characterised in that** said modular elements (3) adapted to be composed are equipped on one side thereof with at least one guiding projection adapted to engage corresponding sliding wheels places in the vehicle cabin wall, in order to move said modular elements (3) adapted to be composed by sliding them on said wheels in order to arrange said modular elements (3) adapted to be composed one overlapped to another or one parallel to another.

10. Bed (1) according to claim 1, **characterised in that** said modular elements (3) adapted to be composed are each adapted to contain a pillow (10).

11. Bed (1) according to claim 10, **characterised in that** said pillow (10) is co-stamped with its own corresponding modular element (3) adapted to be composed.

12. Bed (1) according to claim 1, **characterised in that** said modular elements (3) adapted to be composed are equipped with an opening and a room for containing and make disappear inside them at least one small table (5).

13. Bed (1) according to claim 12, **characterised in that** said small table (5) is equipped with a telescopic leg (9) for abutting against the floor and with at least two legs (11) of a fixed length for abutting to the supporting bar (8) during the operative opening step of said small table (5).

14. Bed (1) according to claim 1, **characterised in that** said modular elements (3) adapted to be composed are equipped with an opening and a room for containing and making disappear therein at least one objects-holder plane (7).

15. Bed (1) according to claim 14, **characterised in that** said objects-holder planes (7) are a plurality, some of said objects-holder planes (7) being equipped with openings for supporting bottles or other vessels with cylindrical or various or elongated shapes.

16. Bed (1) according to claim 1, **characterised in that** said modular elements (3) adapted to be composed are adapted to support accessories placed in their lower part, namely their part oriented towards the cabin floor when said bed (1) is in its open position.
